(19) Europäisches Patentamt
European Patent Office
Office européen des brevets

(11) Veröffentlichungsnummer: **0 039 782**
**A1**

(12) # EUROPÄISCHE PATENTANMELDUNG

(21) Anmeldenummer: **81102617.8**

(22) Anmeldetag: **07.04.81**

(51) Int.Cl.³: **C 08 J 3/24**
C 08 K 5/15

(30) Priorität: **13.05.80 DE 3018321**

(43) Veröffentlichungstag der Anmeldung:
**18.11.81 Patentblatt 81/46**

(84) Benannte Vertragsstaaten:
**AT BE CH DE FR GB IT LI NL SE**

(71) Anmelder: **Peroxid-Chemie GmbH**
**Dr.-Gustav-Adolph-Strasse 2**
**D-8023 Höllriegelskreuth bei München(DE)**

(72) Erfinder: **Meyer, Heinz, Dr.**
**Kapellenweg 4**
**D-8021 Hohenschäftlarn(DE)**

(72) Erfinder: **Dorn, Maximilian, Dr.**
**Lorenzonistrasse 42**
**D-8000 München 90(DE)**

(72) Erfinder: **Seidl, Hans, Dr.**
**Heckenrosenstrasse 6**
**D-8022 Grünwald(DE)**

(74) Vertreter: **Weickmann, Heinrich, Dipl.-Ing**
**Patentanwälte Dipl.Ing.H.Weickmann et al,**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86(DE)**

(54) **Verfahren zur Vernetzung von unpolaren Polymeren im hochfrequenten elektrischen Wechselfeld.**

(57) Zur Vernetzung von unpolaren Polymeren, insbesondere von Homo- und Mischpolymeren des Äthylens, im hochfrequenten elektrischen Wechselfeld verwendet man als Vernetzungsmittel ein Peroxid der allgemeinen Formel I

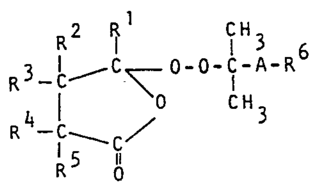

(I)

in der

$R^1$ ein Wasserstoffatom, eine Alkylgruppe mit 1 bis 4 Kohlenstoffatomen oder eine gegebenenfalls durch Halogenatome oder Alkylgruppen mit 1 bis 4 Kohlenstoffatomen substituierte Phenylgruppe,

$R^2$, $R^3$, $R^4$ und $R^5$ jeweils Wasserstoffatome oder gemeinsam mit den Kohlenstoffatomen, an die sie gebunden sind, einen o-Phenylenrest,

A eine geradkettige oder verzweigte Alkylengruppe mit 1 bis 5 Kohlenstoffatomen, eine geradkettige oder verzweigten Alkenylengruppe mit 1 bis 5 Kohlenstoffatomen oder eine Phenylengruppe und

$R^6$ ein Wasserstoffatom oder einen Rest der Formel II

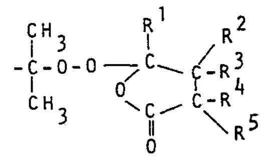

(II)

in der

$R^1$ bis $R^5$ die oben angegebenen Bedeutungen besitzen, bedeuten.

EP 0 039 782 A1

Verfahren zur Vernetzung von unpolaren Polymeren im hochfrequenten elektrischen Wechselfeld

Die Erfindung betrifft ein Verfahren zur Vernetzung von unpolaren Polymeren im hochfrequenten elektrischen Wechselfeld unter Verwendung von Peroxiden als Vernetzungsmittel.

Es ist bereits bekannt, ungesättigte Makromoleküle, wie Naturkautschuk, mit Schwefel oder schwefelliefernden Reagenzien, wie Thiuramdisulfiden, zu vernetzen. Auch das Vernetzen von Polymeren unter Einwirkung von Elektronen- oder γ-Strahlen ist bekannt (die sogenannte Strahlenvernetzung).

Die chemische Vernetzung von Polymeren ohne Doppelbindungen gelingt entweder mit Strahlen (Elektronen oder γ-Strahlen), durch gepfropfte Vinylsilane (Dow Corning-Verfahren) oder auch insbesondere durch Peroxide, die bei Temperaturerhöhung in Radikale zerfallen. Diese Radikale können durch Abspaltung von Wasserstoffatomen vom Polymeren Polymerradikale liefern, die unter Vernetzung rekombinieren können. Die den Peroxidzerfall einleitende Wärmezufuhr kann durch direktes Beheizen, durch Infrarotstrahlung, durch heiße gasförmige oder

flüssige Medien oder auch durch Ultraschall erfolgen.

Wenn es sich bei dem Polymeren um ein polares Material handelt, so kann die Wärme auch durch ein hochfrequentes elektrisches Wechselfeld (Mikrowellen, UHF) zugeführt werden. Nichtpolare Kunststoffe können nur dann im hochfrequenten elektrischen Wechselfeld erhitzt werden, wenn sie polare Hilfs- oder Füllstoffe, wie beispielsweise Ruß oder Triallylcyanurat, enthalten. Diese Zusätze sind aber auch nach dem Vernetzungsprozeß UHF-aktiv, was beispielsweise bei der Verwendung von vernetztem Polyäthylen für die Hochspannungsisolation unerwünscht ist.

Deshalb wird in den deutschen Offenlegungsschriften 26 11 349 und 28 o3 252 bei Verfahren zur Vernetzung von Kunststoffen auch der Zusatz von Peroxiden vorgeschlagen, die polar sind und unter der Einwirkung hochfrequenter elektrischer Wechselfelder eine Erwärmung und Vernetzung der Kunststoffe verursachen. Die normalerweise zur Vernetzung von Polymeren verwendeten Dialkylperoxide, Diaralkylperoxide sowie die Perketale und Hydroperoxide werden vom hochfrequenten elektrischen Wechselfeld nicht angeregt (siehe Kunststoffe 69, 8 (1979) 43o ff). Die vernetzungswirksamen und durch hochfrequente elektrische Wechselfelder anregbaren Peroxide, wie beispielsweise die Perester, besitzen für die meisten Anwendungen eine zu geringe Scorchsicherheit, d. h. sie neigen zu einer vorzeitigen unerwünschten Vernetzung, insbesondere während des Einarbeitens der Peroxide in die Polymere unter Wärmeeinwirkung.

Die DE-OS 28 o3 252 lehrt nun tert.-Butylperbenzoat oder analog aufgebaute organische Peroxide als Hilfsstoff für das Vernetzen von als elektrische Isolatoren eingesetzte

Kunststoffe und/oder Kautschuke unter der Einwirkung eines hochfrequenten elektrischen Wechselfeldes. Diese als Vernetzungsmittel gut bekannten Perester (und seine Analogen) besitzen aber den entscheidenden Nachteil, daß bei ihrem Einmischen in die zu vernetzenden Kunststoffe und/oder Kautschuke die oben angesprochenen Scorchprobleme, d. h. eine unerwünschte vorzeitige Vernetzung, auftreten können, wenn es sich bei diesen Kunststoffmaterialien um beispielsweise Polyäthylen oder Äthylen/Propylen-Kautschuke bzw. Äthylen/Propylen/Dien-Kautschuke handelt. Außerdem sind die Perester sehr rußempfindlich, d. h. sie neigen in Gegenwart von Ruß, der gerne als Füllstoff verwendet wird, zu einer vorzeitigen Zersetzung und damit einem Verlust an aktivem Sauerstoff. Damit ist es erforderlich, bei der Anwendung von tert.-Butylperbenzoat in Polyäthylen eine maximale Verarbeitungstemperatur von 11o bis 12o $^{o}C$ ($t_2$ = 5,5 min) einzuhalten. Im Fall von Äthylen/Propylen-Kautschuk bzw. Äthylen/Propylen/Dien-Kautschuk liegt die maximale Verarbeitungstemperatur für tert.-Butylperbenzoat bei 9o $^{o}C$ ($t_2$ = 7o min). Dieser Umstand erschwert die Verwendung dieses Peroxids sehr, da normalerweise das Vermischen des zu vernetzenden Polymeren und des Peroxids bei wesentlich höheren Temperaturen in den üblichen Mischapparaturen (wie Walzenstühle, Stempelkneter, Extruder etc.) erfolgt.

Weiterhin besitzt das nach der Lehre der DE-OS 28 o3 252 verwendete tert.-Butylperbenzoat bei den oben angegebenen maximalen Verarbeitungstemperaturen bereits eine so hohe Flüchtigkeit, daß es in offenen Mischvorrichtungen verdampft und zu Umweltbelästigungen Anlaß gibt.

Die Aufgabe der vorliegenden Erfindung besteht nun darin, Peroxide für das Vernetzen von unpolaren Polymeren

im hochfrequenten elektrischen Wechselfeld zu finden, die beim Vermischen mit dem Polymeren keine Scorchprobleme aufwerfen, d. h. nicht zu einer vorzeitigen Vernetzung führen, selbst wenn Mischtemperaturen zwischen 13o bis 14o°C angewandt werden, die weniger flüchtig sind als die herkömmlich eingesetzten Peroxide, die sich im hochfrequenten elektrischen Wechselfeld gut oder besser als die bislang eingesetzten Peroxide anregen lassen, die eine gute oder noch bessere Vernetzungswirksamkeit zeigen und nicht rußempfindlich sind.

Es hat sich nunmehr überraschenderweise gezeigt, daß diese Aufgabe durch die Peroxide der nachstehenden allgemeinen Formel I

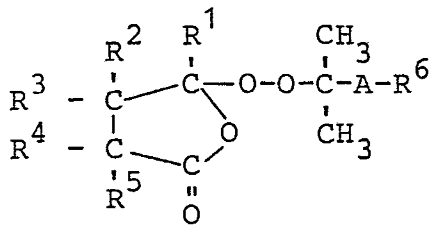

(I)

in der

$R^1$ ein Wasserstoffatom, eine Alkylgruppe mit 1 bis 4 Kohlenstoffatomen oder eine gegebenenfalls durch Halogenatome oder Alkylgruppen mit 1 bis 4 Kohlenstoffatomen substituierte Phenylgruppe,

$R^2$, $R^3$, $R^4$ und $R^5$ jeweils Wasserstoffatome oder gemeinsam mit den Kohlenstoffatomen, an die sie gebunden sind, einen o-Phenylenrest,

A eine geradkettige oder verzweigte Alkylengruppe mit 1 bis 5 Kohlenstoffatomen, eine geradkettige oder verzweigte Alkenylengruppe mit 1 bis 5 Kohlenstoffatomen oder eine Phenylengruppe und

$R^6$ ein Wasserstoffatom oder einen Rest der Formel II

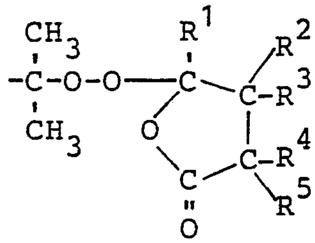

(II)

in der
$R^1$ bis $R^5$ die oben angegebenen Bedeutungen besitzen, bedeuten, gelöst werden kann.

Diese Peroxide zeichnen sich durch hohe Schmelztemperaturen, bzw. Siedepunkte, hohe Scorchtemperaturen, eine hohe UHF-Aktivität, eine hohe Vernetzungswirksamkeit und eine geringe Rußempfindlichkeit aus.

Gegenstand der Erfindung ist daher das Verfahren gemäß Hauptanspruch.

Gemäß einer bevorzugten Ausführungsform der Erfindung verwendet man als Peroxid ein tert.-Alkyl-3-phenylphthalid der allgemeinen Formel III

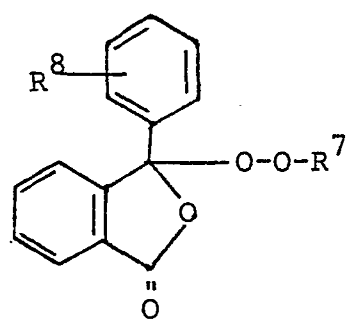

(III)

in der
$R^7$ eine tert.-Alkylgruppe mit 4 bis 8 Kohlenstoffatomen und
$R^8$ ein Wasserstoffatom, ein Chloratom oder eine Alkylgruppe mit 1 bis 4 Kohlenstoffatomen
bedeuten.

Gemäß einer weiteren bevorzugten Ausführungsform setzt

man die Peroxide der allgemeinen Formel III ein, in der

$R^7$ eine tert.-Butylgruppe, eine tert.-Amylgruppe oder tert.-Octylgruppe und

$R^8$ ein Wasserstoffatom, ein Chloratom oder eine Methylgruppe

bedeuten.

Beispiele für nach dem erfindungsgemäßen Verfahren zu vernetzende unpolare Polymere sind Polyäthylen niedriger Dichte und Polyäthylen hoher Dichte, Äthylen/Propylen-Kautschuk, Äthylen/Propylen/Dien-Kautschuk, Naturkautschuk, Polyisoprenkautschuk, Polybutadienkautschuk, Silikonkautschuk und Polybutylen.

Die erfindungsgemäße Verfahrensweise läßt sich jedoch auch auf polare Polymere anwenden, wenngleich polare Polymere auch mit den herkömmlichen vernetzungswirksamen Peroxiden im hochfrequenten elektrischen Wechselfeld vernetzt werden können.

Bei dem erfindungsgemäßen Verfahren verwendet man mit Vorteil das Peroxid in einer Menge, die einem Gehalt des zu vernetzenden Polymeren an aktivem Sauerstoff von o,o2 bis o,4 Gew.-%, vorzugsweise o,o8 bis o,25 Gew.-% entspricht. Diese Mengen an aktivem Sauerstoff entsprechen im allgemeinen einem Peroxidgehalt zwischen o,5 und 1o Gew.-% und vorzugsweise zwischen 2 und 6 Gew.-%.

Erfindungsgemäß besonders bevorzugt zu vernetzende Polymere sind Polyäthylen, Äthylen, Copolymere oder Äthylenterpolymere, wie die oben angesprochenen Äthylen/Propylen-Copolymeren oder die Äthylen/Propylen/Dien-Terpolymeren, sowie ganz allgemein Homo- und Copolymere von α-Olefinen.

Die bei dem erfindungsgemäßen Verfahren eingesetzten

Peroxide der allgemeinen Formel I bzw. III sind aus der DE-AS 15 43 353 bzw. der DE-PS 1 518 128 bekannt und können unter Anwendung der in diesen Druckschriften beschriebenen Verfahrensweisen oder dazu analogen Verfahrensweisen hergestellt werden.

In der DE-PS 1 518 128 ist angegeben, daß die dort beschriebenen Peroxidphthalide, die der oben angegebenen allgemeinen Formel III entsprechen, als Radikalbildner für die Aushärtung ungesättigter Polyester und polymerisierbare bzw. vernetzbare Verbindungen enthaltende Lacke, insbesondere für Pfropfreaktionen geeignet sind. Diese Druckschriften geben jedoch keinerlei Anhaltspunkte dafür, daß die erfindungsgemäß eingesetzten Peroxide sich in besonders vorteilhafter Weise für das Vernetzen von unpolaren Polymeren im hochfrequenten elektrischen Wechselfeld eignen, indem sie

- eine höhere Scorchtemperatur als die für diesen Anwendungszweck bislang üblichen Perester, wie beispielsweise tert.-Butylperbenzoat, aufweisen, so daß sie ohne eine vorzeitige Vernetzung die Extrusion des peroxidhaltigen Polyäthylens ermöglichen (das in Abhängigkeit von seiner Dichte Erweichungstemperaturen von 1o5 bis 14o°C aufweist);
- stärker auf das hochfrequente elektrische Wechselfeld ansprechen als die vorbekannten Perester;
- eine bessere Vernetzungswirksamkeit bei der Bestrahlung zeigen als die vorbekannten Perester;
- wesentlich weniger flüchtig sind als die bislang eingesetzten Perester; und
- keine Rußempfindlichkeit zeigen wie die bislang üblichen Perester.

Bei dem erfindungsgemäßen Verfahren kann man übliche Vorrichtungen zur Erzeugung des hochfrequenten elektrischen Wechselfeldes verwenden, die üblicherweise bei 245o MHz arbeiten. Dabei beeinflußt die UHF-Leistung dieser Vorrichtungen die Aufheizzeit stark. Die industriellen Anlagen besitzen Leistungen von ca. 2,5 bis 3o kW.

Das erfindungsgemäße Verfahren ist insbesondere zum Vernetzen von Kabelisolierungen, Rohren, Profilen, Formteilen, Schaumstoffen, Dichtungen, Fügeverbindungen und dergleichen aus Polyäthylen, Äthylen/Propylen-Kautschuk, Äthylen/Propylen/Dien-Kautschuk, Silikonkautschuk, Naturkautschuk, Isoprenkautschuk, Butylkautschuk, Butadienkautschuk und Olefincopolymeren geeignet.

Mit Hilfe der erfindungsgemäßen Verfahrensweise lassen sich die herkömmlichen teuren Beheizungsanlagen vermeiden und es wird eine wesentliche Steigerung der Produktionsgeschwindigkeit der vernetzten Produkte erreicht.

Die folgenden Beispiele dienen der weiteren Erläuterung der Erfindung.

B e i s p i e l 1

Man vermischt 4,8 g 3-tert.-Butylperoxy-3-phenyl-phthalid (FFT) mit 1oo g Polyäthylen (Lupolen 18oo S der Firma BASF) durch Extrusion oder vermischt die Materialien trocken und schmilzt sie während 3o Minuten bei 125°C auf. Das auf 125°C erhitzte Material wird während 5 Minuten in einen Mikrowellenherd (Siemens) eingebracht, der bei einer Nennleistung von 5oo W und einer Wellenlänge von 245o MHz betrieben wird. Hierbei erhitzt sich das Material auf 19o°C.

Das vernetzte Material zeigt einen Quellwert von 4,7

nach der Behandlung mit Xylol bei 14o°C während einer Einwirkungszeit von 2 Stunden.

Man wiederholt die Verfahrensweise unter Anwendung von mol-äquivalenten Mengen tert.-Butylperbenzoat (TBPB, 3 g), 3-tert.-Butylperoxy-3-(p-chlorphenyl)-phthalid (CLFFT, 5 g), γ-tert.-Butylperoxy-valerolacton (TBVLA, 3 g) und Di-tert.-butylperoxy-terephthalat (TBPT 5o %, 4,5 g). Die hierbei erhaltenen Ergebnisse sind in der nachstehenden Tabelle I zusammengestellt.

TABELLE I

| Nr. | Verwendetes Peroxid | Gehalt des Peroxids an aktivem Sauerstoff (%) | Scorch-temperatur (°C) | Peroxid-menge (Gew.-%) | Schmelz-punkt des Per-oxids (°C) | Aktiver Sauer-stoffge-halt (Teile pro 1oo Teile des Polymeren) | T Anfang (°C) | T Ende nach 5 Min. (°C) | Quellwert | Gelgehalt (%) |
|---|---|---|---|---|---|---|---|---|---|---|
| 1 | TBPB | 8 | 125 | 3,o | - | o,24 | 125 | 16o | 6,o | 4o |
| 2 | CLFFT | 4,8 | 145 | 5,o | 42-45 | o,24 | 125 | 22o | 4,6 | 66 |
| 3 | FFT | 5,o | 14o | 4,8 | 1o8-114 | o,24 | 125 | 2oo | 4,7 | 65 |
| 4 | TBVLA | 8,1 | 15o | 3,o | 38-44 | o,24 | 125 | 16o | 1o,3 | 71 |
| 5 | TBPT 5o% auf PE+ | 5,3 | 13o | 4,5 | - | o,24 | 125 | 16o | 5,7 | 48 |

+ TBPT (Di-tert.-butylperoxy-terephthalat) muß mit Polyäthylen phlegmatisiert werden, da es in Reinform explosiv ist. Im Gegensatz dazu können die erfindungsgemäß verwendeten Peroxide in technich reiner Form eingesetzt werden.

B e i s p i e l  2

Man vermischt 1oo Gew.-Teile Äthylen/Propylen/Dien-Kautschuk (Keltan 778) mit 5o Gew.-Teilen mikronisierter Ölkreide, 5o Gew.-Teilen Weißöl (Ondina g 17 der Firma Shell), 1 Gew.-Teil polymeres 1,2,4-Trimethyl-dehydrochinolin (Flectol H der Firma Monsanto) und 1o Gew.-Teilen Ruß (Corax P der Firma DEGUSSA), wobei man das Vermischen auf einem Walzenstuhl bewirkt. Zum Schluß werden bei etwa 9o bis 1oo°C die Peroxide zugemischt.

Aus dem fertigen erkalteten Walzenfell werden etwa 2 cm dicke Formteile ausgeschnitten und in dem in Beispiel 1 beschriebenen Mikrowellenherd von Raumtemperatur an aufgeheizt. Die Bestrahlungszeit in dem mit einer Leistung von 5oo W betriebenen Mikrowellenherd beträgt einheitlich 12 Minuten. Der angewandte Peroxidgehalt entspricht einheitlich einem Gehalt an aktivem Sauerstoff von o,24 %, bezogen auf das Polymere.

Die hierbei erhaltenen Ergebnisse sind in der nachstehenden Tabelle II zusammengestellt.

TABELLE II

| Nr. | Peroxid | Gehalt des Peroxids an aktivem Sauerstoff (%) | Scorchtemperatur ($^{o}C$) | Peroxidmenge (Gew.-%) | T Anfang ($^{o}C$) | T Ende ($^{o}C$) | Quellwert |
|---|---|---|---|---|---|---|---|
| 6 | ohne | - | - | - | 25 | 14o | löst sich auf |
| 7 | TBPB | 3,o | 125 | 3,o | 25 | 1oo | löst sich auf |
| 8 | FFT | 5,o | 14o | 4,8 | 25 | 19o | 4 |
| 9 | CLFFT | 4,8 | 14o | 5,o | 25 | 19o | 4 |
| 1o | TBVLA | 8,1 | 15o | 3,o | 25 | 19o | 1o,3 |
| 11 | TBPT | 5,3 | 13o | 4,5 | 25 | 13o | löst sich auf |

Der Perester tert.-Butylperbenzoat wird durch Ruß zersetzt und desaktiviert gleichzeitig den Ruß, so daß keine gleich starke Aufheizung in dem Mikrowellenherd wie ohne Peroxidzusatz erfolgt. Die Werte für die erfindungsgemäß eingesetzten Peroxide FFT, CLFFT und TBVLA liegen wesentlich über den Werten der Vergleichsperoxide (Versuche Nr. 6, 7 und 11).

B e i s p i e l 3

Die Wirksamkeit der erfindungsgemäß verwendeten Peroxide (FFT, ClFFT, TBPVL) bei der Vernetzung von Polyäthylen wurde in einer Meßknetvorrichtung wie in der DE-AS 11 89 71o beschrieben, mit der Wirksamkeit von tert.-Butylperbenzoat und Di-tert.-butylperoxy-terephthalat verglichen. Dabei wurde ein Hochdruckpolyäthylen (mit einer Dichte von o,918 g/cm$^3$) mit starker Verzweigung verwendet.

Jeweils 55 g des angegebenen Polymeren wurden mit den in der Tabelle III angegebenen Peroxiden bei den dort angegebenen Temperaturen unter Verwendung von äquivalenten Dosierungen des aktiven Sauerstoffs von o,15 % vernetzt. Im Meßkneter wurde der Knetwiderstand ermittelt, den ein erwärmtes Material der Umdrehung zweier Nocken entgegensetzt, und zwar in Plastographeneinheiten. Dabei bedeutet ein höherer Widerstand ein besseres Ausmaß an Vernetzung.

Die hierbei erhaltenen Ergebnisse sind in der nachstehenden Tabelle III zusammengestellt.

TABELLE III

| Peroxid | $T_s$ (°C) | $T_R$ (°C) | $W_u$ | $W_{max}$ | $\Delta W$ | $\Delta t$ (min) | F Wm/Wu | L F/$\Delta$t |
|---|---|---|---|---|---|---|---|---|
| tert.-Butyl-perbenzoat | 125 | 15o | 6o | 28o | 22o | 4,5 | 4,6 | 1,o |
| | | 17o | 6o | 48o | 42o | 2 | 8 | 4,o |
| Di-tert.-butylperoxyter-ephthalat | 13o | 15o | 1oo | 56o | 46o | 5,5 | 5,6 | 1,o |
| | | 17o | 8o | 5oo | 42o | 2 | 6,2 | 3,o |
| 3-Phenyl-3-tert.-butyl-peroxy-phthalid (FFT) | 14o | 15o | 8o | 64o | 56o | 8,5 | 8 | o,9 |
| | | 17o | 8o | 64o | 56o | 2 | 8 | 4 |
| 3-p-Chlorphenyl-3-tert.-butylperoxy-phthalid (ClFF | 145 | 17o | 6o | 54o | 48o | 4 | 9,o | 2,25 |
| | | 17o | 6o | 54o | 48o | 1 | 9,o | 9,o |
| γ-tert.-Butylperoxy-va-lerolacton (TBPVL) | 15o | 17o | 7o | 55o | 48o | 4 | 7,85 | 1,96 |
| | | 19o | 6o | 6oo | 54o | 2 | 1o | 5 |

Die in der obigen Tabelle angegebenen Abkürzungen besitzen die folgenden Bedeutungen:

$T_s$ Vorvernetzungstemperatur (diejenige Temperatur, bei der im Verlauf von 1o Minuten nach Peroxidzugabe eine merkliche Erhöhung des Knetwiderstands eintritt, ohne daß eine wirklich gute Vernetzung eintritt - als Maßstab galt eine Erhöhung des Knetwiderstands um etwa 1oo Meßkneter-Einheiten),

$T_R$ Reaktionstemperatur,

$W_u$ Knetwiderstand des unvernetzten Materials,

$W_{max}$ maximaler erreichter Knetwiderstand nach der Vernetzung,

$\Delta W = W_{max} - W_u$,

$\Delta t$ Temperatur bis zum Erreichen von $W_{max}$ nach Zugabe des Peroxids,

$F = W_{max}/W_u$,

$L = F/\Delta t$.

Aus den obigen Versuchen und Vergleichsversuchen läßt sich ohne weiteres erkennen, daß die erfindungsgemäß verwendeten Peroxide den herkömmlichen Peroxiden im Hinblick auf die Vernetzung von unpolaren Polymeren im hochfrequenten elektrischen Wechselfeld erheblich überlegen sind.

## Patentansprüche

1. Verfahren zur Vernetzung von unpolaren Polymeren im hochfrequenten elektrischen Wechselfeld unter Verwendung von Peroxiden als Vernetzungsmittel, dadurch gekennzeichnet, daß man als Vernetzungsmittel ein Peroxid der allgemeinen Formel I

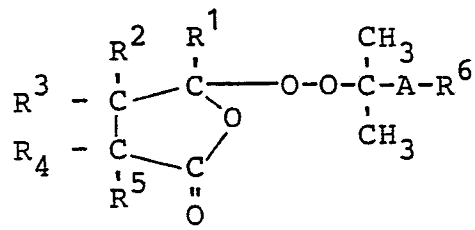 (I)

in der

$R^1$ ein Wasserstoffatom, eine Alkylgruppe mit 1 bis 4 Kohlenstoffatomen oder eine gegebenenfalls durch Halogenatome oder Alkylgruppen mit 1 bis 4 Kohlenstoffatomen substituierte Phenylgruppe,

$R^2$, $R^3$, $R^4$ und $R^5$ jeweils Wasserstoffatome oder gemeinsam mit den Kohlenstoffatomen, an die sie gebunden sind, einen o-Phenylenrest,

A eine geradkettige oder verzweigte Alkylengruppe mit 1 bis 5 Kohlenstoffatomen, eine geradkettige oder verzweigte Alkenylengruppe mit 1 bis 5 Kohlenstoffatomen oder eine Phenylengruppe und

$R^6$ ein Wasserstoffatom oder einen Rest der Formel II

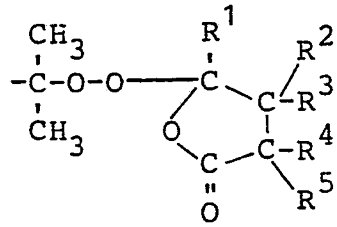 (II)

0039782

in der
$R^1$ bis $R^5$ die oben angegebenen Bedeutungen besitzen, bedeuten, verwendet.

2. Verfahren nach Anspruch 1, d a d u r c h g e k e n n z e i c h n e t , daß man als Peroxid ein tert.-Alkyl-3-phenyl-phthalid der allgemeinen Formel III

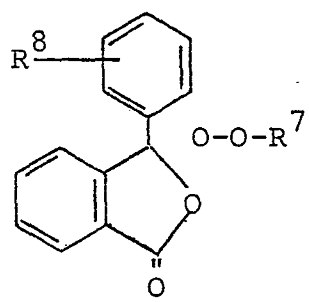

(III)

in der

$R^7$ eine tert.-Alkylgruppe mit 4 bis 8 Kohlenstoffatomen und

$R^8$ ein Wasserstoffatom, ein Chloratom oder eine Alkylgruppe mit 1 bis 4 Kohlenstoffatomen

bedeuten, verwendet.

3. Verfahren nach Anspruch 2, d a d u r c h g e k e n n z e i c h n e t , daß man ein Peroxid der allgemeinen Formel III verwendet, in der

$R^7$ eine tert.-Butylgruppe, eine tert.-Amylgruppe oder eine tert.-Octylgruppe und

$R^8$ ein Wasserstoffatom, ein Chloratom oder eine Methylgruppe

darstellen.

4. Verfahren nach den Ansprüchen 1 bis 3, d a d u r c h g e k e n n z e i c h n e t , daß man das Peroxid in einer Menge verwendet, die einem Gehalt des zu vernetzenden Polymeren an aktivem Sauerstoff von

o,o2 bis o,4 Gew.-%, vorzugsweise o,o8 bis o,25 Gew.-% entspricht.

5. Verfahren nach den Ansprüchen 1 bis 4, dadurch gekennzeichnet, daß man als Polymeres Polyäthylen, ein Äthylen-Copolymeres oder ein Äthylen-Terpolymeres verwendet.

6. Verfahren nach Anspruch 5, dadurch gekennzeichnet, daß man als Äthylen-Copolymeres ein Äthylen/Propylen-Copolymeres verwendet.

7. Verfahren nach Anspruch 5, dadurch gekennzeichnet, daß man als Äthylen-Terpolymeres ein Äthylen/Propylen/Dien-Terpolymeres einsetzt.

Europäisches Patentamt

**0039782**

Nummer der Anmeldung

EP 81 10 2617

# EUROPÄISCHER RECHERCHENBERICHT

| EINSCHLÄGIGE DOKUMENTE | | |
|---|---|---|
| Kategorie | Kennzeichnung des Dokuments mit Angabe, soweit erforderlich, der maßgeblichen Teile | betrifft Anspruch |
| X | EP - A - 0 009 268 (AKZO N.V.)<br>* Ansprüche 1,4 *<br>-- | 1-7 |
| | DE - B - 1 938 503 (PEROXID-CHEMIE)<br>* Ansprüche; Spalte 3, Zeilen 6-13 *<br>-- | 1-7 |
| D | DE - A - 2 611 349 (VEREINIGUNG ZUR FÖRDERUNG DES INSTITUTS FÜR KUNSTSTOFFVERARBEITUNG IN INDUSTRIE UND HANDWERK AN DER RHEIN.-WESTF. TECHN. HOCHSCHULE AACHEN)<br>* Insgesamt *<br>-- | 1-7 |
| | FR - A - 2 424 934 (PAUL TROESTER MASCHINENFABRIK)<br>* Ansprüche * | 1-7 |
| D | & DE - A - 2 803 252<br>---- | |

| KLASSIFIKATION DER ANMELDUNG (Int. Cl.³) |
|---|
| C 08 J 3/24<br>C 08 K 5/15 |

| RECHERCHIERTE SACHGEBIETE (Int. Cl.³) |
|---|
| C 08 J 3/24<br>3/28<br>C 08 K 5/14<br>5/15 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Den Haag | 24-08-1981 | HOFFMANN |